# EUROPEAN PATENT APPLICATION

(11) **EP 4 706 375 A1**
(43) Date of publication of application: **11.03.2026**
(21) Application number: 24800057.2
(22) Date of filing: 12.04.2024
(51) Int. Cl.: A01G 7/00, G06Q 50/02

(54) **GROWTH PREDICTION DEVICE AND GROWTH PREDICTION METHOD**

(30) Priority: 01.05.2023 JP 2023075849
(71) Applicant: KUBOTA CORPORATION, Osaka-shi, Osaka 556-8601 (JP)
(72) Inventor: IIZUKA, Takahiro, Sakai-shi, Osaka 590-0908 (JP)
(74) Representative: Müller-Boré & Partner Patentanwälte PartG mbB
(86) International application number: PCT/JP2024/014788
(87) International publication number: WO 2024/228326

(57) **Abstract**

The present invention improves growth stage prediction accuracy. A growth prediction device (4) includes a stage prediction unit (6) to predict a growth stage for a crop, and a definition unit (7) to define, when a period from a reference date to an accomplishment date of the growth stage includes a specific growth stage, a threshold value (p) that indicates a prediction date for the specific growth stage with respect to transition data for the growth stage predicted by the stage prediction unit (6). When predicting a next growth stage, the stage prediction unit (6) predicts a date on which transition data for the next growth stage reaches the threshold value (p) to be the specific growth stage.

## Description

### Technical Field

The present invention relates to a growth prediction device and a growth prediction method.

### Background Art

Sequential prediction of a plurality of stages indicating a growing process of a crop (for example, a sprouting stage, a heading stage, a blooming stage and/or the like) and an appropriate task for each growth stage (that is, timely task) are necessary for crop harvesting and for quality stabilization of the crop. A crop growth status analysis system disclosed in Patent Literature 1 includes a growth prediction device to predict, based on time-series meteorological data, a growth status of the crop after a reference date and estimate a period in which the crop reaches a growth stage.

### Citation List

### Patent Literature

Patent Literature 1: Japanese Unexamined Patent Application Publication No.2021-006017.

### Summary of Invention

### Technical Problem

The growth prediction device disclosed in Patent Literature 1 predicts a date on which an effective integrated temperature value, that is a total of portions greater than a constant reference value among average temperatures of dates from a reference date, reaches a constant value as a date that reaches a constant growth status (that is, an accomplishment date of a growth stage). However, a prediction accuracy of the above-mentioned crop growth status analysis system for growth stages is low.

In view of the above issue, an object of the present invention is to provide a growth prediction device and a growth prediction method that can improve prediction accuracy of a growth stage.

### Solution to Problem

Example embodiments of the present invention in view of the above issues may include the following feature(s).

The growth prediction device according to an example of the present invention includes a stage prediction unit to predict a growth stage for a crop, and a definition unit to define, when a period from a reference date to an accomplishment date of the growth stage includes a specific growth stage, a threshold value that indicates a prediction date for the specific growth stage with respect to transition data for the growth stage predicted by the stage prediction unit. The stage prediction unit predicts, when predicting a next growth stage, a date on which transition data for the next growth stage reaches the threshold value to be the specific growth stage.

The stage prediction unit may predict a date on which an integrated value obtained by integrating a quantified growth transition value of the crop from the reference date, reaches a normalized value to be the accomplishment date for the growth stage of the crop. The definition unit may define, when the period from the reference date to the accomplishment date of the growth stage includes the specific growth stage, the integrated value corresponding to the accomplishment date of the specific growth stage indicated by actual data of the crop in transition data of the integrated value from the reference date to the accomplishment date predicted by the stage prediction unit to be a threshold value indicating a prediction date for the specific growth stage. The stage prediction unit may predict, when predicting a next growth stage, a date on which the integrated value of the next growth stage reaches the threshold value to be the specific growth stage and may predict the day on which the integrated value reaches the normalized value to be the accomplishment date of the next growth stage.

The definition unit may define an average value that is an average of respective integrated values of a plurality of crop varieties corresponding to the specific growth stage respectively indicated by actual data of the plurality of crop varieties.

The definition unit may define the integrated value corresponding to the specific growth stage indicated by actual data of a single crop variety to be the threshold value.

The definition unit may define the integrated value corresponding to the specific growth stage indicated by actual data of a same crop variety to be the threshold value.

The definition unit may define an integrated value corresponding to the specific growth stage indicated by actual data of a crop in a designated agricultural field to be the threshold value.

The period from the reference date to the accomplishment date of the growth stage may include an overwintering period and the specific growth stage immediately following the overwintering period.

The crop may be an overwintering crop.

The overwintering crop may be either one of a wheat variety or onions.

The specific growth stage may be any one of a stem elongation stage, a panicle formation stage, an internode-elongation initiating stage and a meiotic stage for a wheat variety, and any one of a stem and leaves extension stage and a bulb enlargement stage for onions.

A growth prediction method includes a first step for predicting a growth stage for a crop by a stage prediction unit, a second step for defining, by a definition unit, a threshold value that indicates a prediction date for a specific growth stage with respect to transition data for the growth stage predicted by the stage prediction unit when a period from a reference date to an accomplishment date of the growth stage includes the specific growth stage, and a third step for predicting, when the stage prediction unit predicts a next growth stage, a date on which transition data for the next growth stage reaches the threshold value to be the specific growth stage.

### Advantageous Effects of Invention

According to the present invention, it is possible to improve a prediction accuracy of a growth stage.

### Brief Description of Drawings

[FIG. 1] FIG. 1 illustrates an agricultural assistance system including a growth prediction device according to an example embodiment.
[FIG. 2A] FIG. 2A illustrates an example of a task planning screen.
[FIG. 2B] FIG. 2B illustrates an example of a task confirmation screen.
[FIG. 3] FIG. 3 illustrates an example of a relationship between main agricultural tasks for wheat cultivation and growth stages.
[FIG. 4] FIG. 4 illustrates an example of a process block for growth prediction via a DVI method.
[FIG. 5] FIG. 5 illustrates a comparison of a growth prediction of the present example embodiment to an existing growth prediction.
[FIG. 6A] FIG. 6A illustrates examples of annual differences regarding a heading stage.
[FIG. 6B] FIG. 6B illustrates examples of prediction results for a stem elongation stage from the existing sequential growth predictions.
[FIG. 7] FIG. 7 describes an existing sequential growth prediction.
[FIG. 8A] FIG. 8A describes a growth prediction of the present example embodiment.
[FIG. 8B] FIG. 8B illustrates a relationship between transition data of a DVI value and a threshold value to predict a heading stage, and a normalized value.
[FIG. 9] FIG. 9 illustrates examples of actual or past data of stem elongation stage for a plurality of crop varieties (wheat varieties).
[FIG. 10] FIG. 10 illustrates an example of a distribution of DVI values at stem elongation stage.
[FIG. 11] FIG. 11 illustrates an example of DVI value transition.
[FIG. 12] FIG. 12 illustrates examples of crop varieties with a single piece of actual or past data of stem elongation stage.
[FIG. 13] FIG. 13 illustrates an example of a determination table.
[FIG. 14] FIG. 14 illustrates an example of a settings screen.
[FIG. 15] FIG. 15 is a flowchart showing a process to predict a growth stage.
[FIG. 16] FIG. 16 illustrates an example of a summary confirmation screen.

### Description of Embodiments

The following describes embodiments of the present invention based on illustrations.

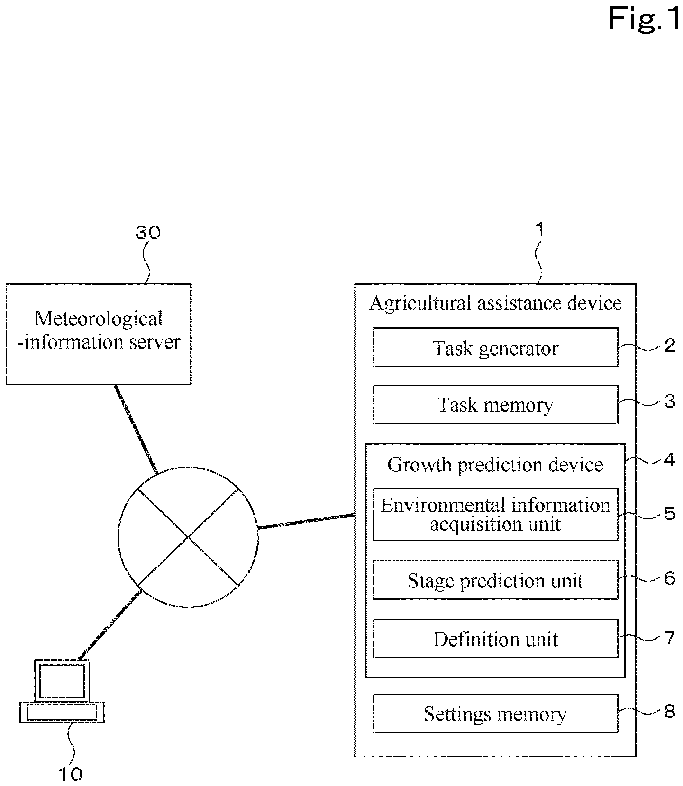

FIG. 1 illustrates an agricultural assistance system including a growth prediction device 4 according to an example embodiment. In FIG. 1, the agricultural assistance system includes an agricultural assistance device 1. The agricultural assistance device 1 includes a fixed computer or the like such as a server or a personal computer, or a portable terminal or the like such as a smartphone, a tablet or a PDA. In the example embodiment, the agricultural assistance device 1 is a server. The agricultural assistance device 1 is a device able to assist agricultural task or the like. The agricultural assistance device 1 may be connected to an external device 10 such as a personal computer, a smartphone, a tablet, a PDA or the like.

The agricultural assistance device 1 includes a task generator 2 and a task memory 3. The task generator 2 includes a program and/or the like stored in a processor of an electronic/electric circuit, a CPU and/or the like provided with the agricultural assistance device 1. The task memory 3 is a memory such as a nonvolatile memory or the like.

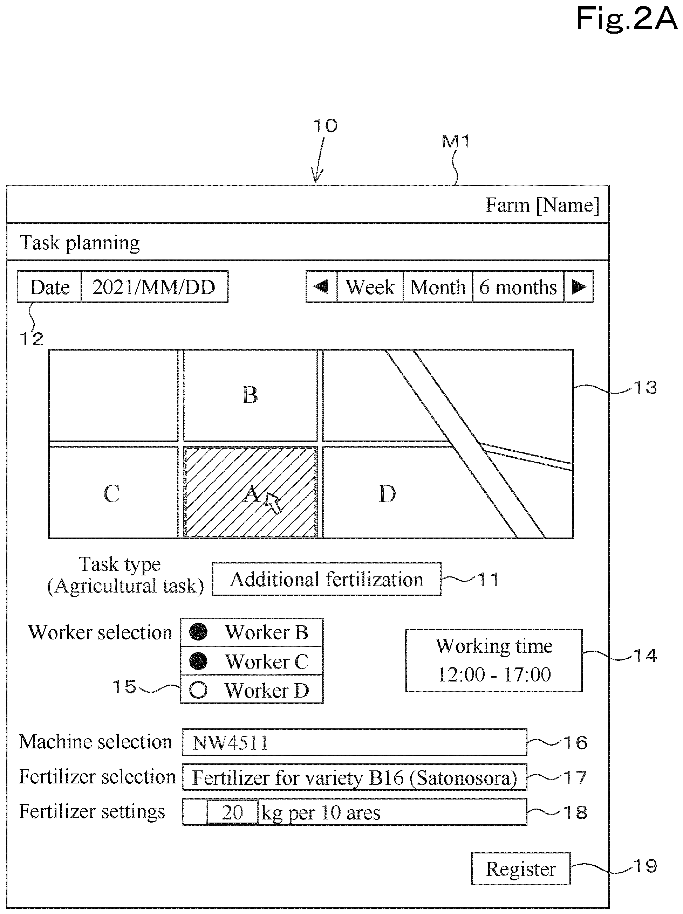

The task generator 2 generates a task planning including at least an agricultural task, a scheduled operation date and an agricultural field. When the external terminal 10 receives an instruction from a user, a worker or the like to make a communication connection, the external terminal 10 communicably connects to the agricultural assistance device 1. When the user, the worker or the like sends a first instruction (an instruction to display the task planning) to the agricultural assistance device 1, the task generator 2 causes the external terminal 10 to display a task planning screen M1 as shown in FIG. 2A. The task planning screen M1 includes a task setting portion 11, a date setting portion 12, an agricultural field setting portion 13 and a time setting portion 14. The task setting portion 11 is a portion to set an agricultural task and which can set a designated agricultural task by selecting an agricultural task from agricultural task(s) registered beforehand.

Agricultural tasks are tasks performed to cultivate a crop (for example an agricultural crop such as a wheat variety, or a vegetable such as onions, cabbages, or broccoli), and include tasks depending on a growth stage of the crop. An appropriate task for each growth stage (that is, timely task) is necessary for crop harvesting and for quality stabilization of the crop. A growth stage is also called a development stage, a growth phase, or a growth period.

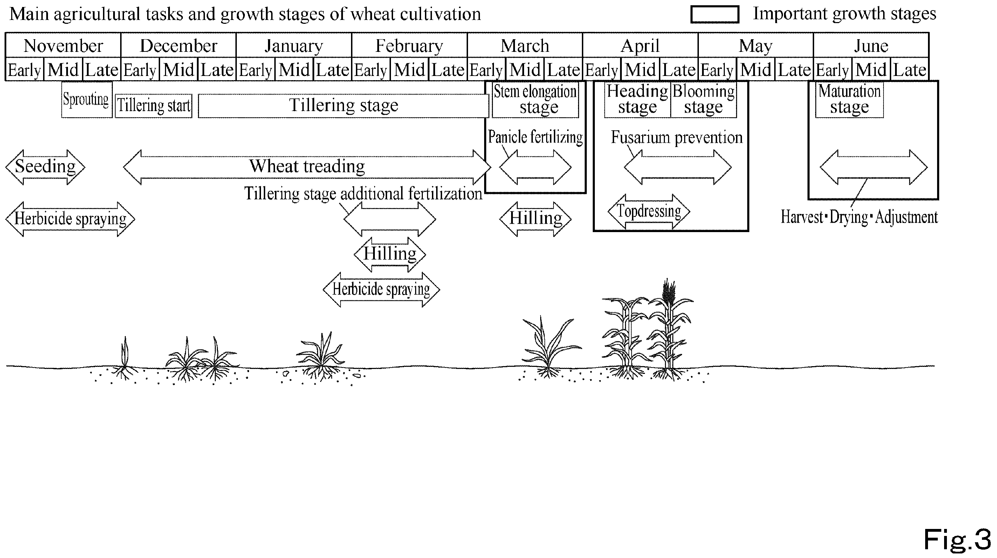

For example, as shown in FIG. 3, agricultural tasks for a wheat variety include seeding, herbicide spraying, wheat treading, tillering-stage additional fertilizing, hilling, panicle fertilizing, fusarium prevention, topdressing, harvest, drying, adjustment and/or the like. A plurality of growth stages for wheat include a sprouting stage, a tillering start stage, a tillering-stage, a stem elongation stage, a heading stage, a blooming stage, a maturation stage and/or the like. An appropriate task is assigned accordingly to each of the growth stages. For example, the agricultural task necessary for the sprouting stage is the herbicide spraying. The agricultural tasks necessary for the tillering-stage are the wheat treading, the tillering-stage additional fertilizing, the hilling, and the herbicide spraying. The agricultural tasks necessary for the stem elongation stage are the panicle fertilizing and the hilling. The agricultural tasks necessary for the heading stage are the topdressing, and the fusarium prevention.

Referring again to FIG. 2A, the date setting portion 12 is a portion to set a scheduled operation date to perform an agricultural task set by the task setting portion 11, and can set a scheduled operation date by receiving an input of a year, month, day and/or the like. The agricultural field setting portion 13 is a portion to set an agricultural field on which an agricultural task is to be performed, for example, a plurality of agricultural fields are displayed on an agricultural map registered beforehand, and a designated agricultural field selected from the plurality of agricultural fields is set to be the agricultural field on which the agricultural task is to be performed. The time setting portion 14 is a portion to set a time slot during which an agricultural task is to be performed, and can set a time slot by receiving time inputs.

The task planning screen M1 may include a worker setting portion 15 to set a worker to perform the agricultural task, a machine setting portion 16 to set a machine to perform the agricultural task, a spraying solution setting portion 17 to set a name of the spraying solution in a case where the agricultural task is a task to spray a spraying solution, and a spraying amount setting portion 18 to set a spraying amount of the spraying solution.

When a registration button 19 displayed on the task planning screen M1 is selected, the task generator 2 generates a task planning based on the pieces of information (content) set by the task setting portion 11, the date setting portion 12, the agricultural field setting portion 13, the time setting portion 14, the worker setting portion 15, the machine setting portion 16, the spraying solution setting portion 17 and the spraying amount setting portion 18. The task memory 3 stores the task planning generated by the task generator 2 (agricultural task, scheduled operation date, agricultural field, time slot, worker, machine, spraying solution name and spraying amount). The task planning in the above-mentioned example embodiment is only an example and does not imply any limitation.

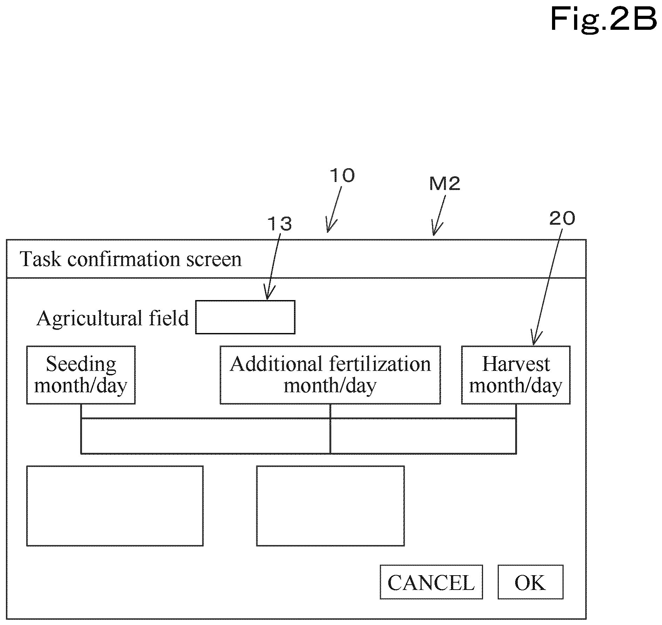

Thus, a supervisor, the worker and/or the like can verify the task planning by displaying, on the external terminal 10, the task planning generated by the task generator 2 of the agricultural assistance device 1. For example, when the external terminal 10 connects to the agricultural assistance device 1 and sends a second instruction (an instruction to display a task confirmation screen M2) to the agricultural assistance device 1, the agricultural assistance device 1 causes the external terminal 10 to display the task confirmation screen M2 as shown in FIG. 2B.

The task confirmation screen M2 includes the agricultural field setting portion 13 and the task display portion 20. The task display portion 20 is a portion to display a task planning set with respect to the agricultural field set by the agricultural field setting portion 13. The task display portion 20 displays agricultural tasks and scheduled operation dates in a chronological order. FIG. 2B illustrates an example showing seeding, additional fertilizing and harvest as agricultural tasks for a wheat variety.

As shown in FIG. 1, the agricultural assistance device 1 includes a growth prediction device 4. The growth prediction device 4 acquires environmental information indicated by an environment of an agricultural field, and predicts a status of a crop, that is a growth stage, based on the acquired environmental information. Environmental information is meteorological information and/or the like indicating a surrounding environment of an agricultural field. Meteorological information is for example, a wind direction, a wind speed, a temperature, a humidity, clear weather, cloudy weather, rain, thunder, snow, precipitation, snowfall, precipitation probability, atmospheric pressure, an atmospheric pressure distribution and/or the like. The growth stages include the sprouting stage, the tillering start stage, the tillering-stage, the stem elongation stage, a panicle formation stage, an internode-elongation initiating stage, a meiotic stage, the heading stage, the blooming stage, the maturation stage, a harvest stage and/or the like.

The following describes how the growth prediction device 4 predicts a growth stage based on environmental information.

The growth prediction device 4 includes an environmental information acquisition unit 5, a stage prediction unit 6, and a definition unit 7. The environmental information acquisition unit 5, the stage prediction unit 6 and the definition unit 7 include a program and/or the like stored in a processor of an electronic/electric circuit, a CPU and/or the like provided with the agricultural assistance device 1.

The environmental information acquisition unit 5 acquires environmental information that is in an agricultural field included in a task planning. For example, when an acquisition instruction for environmental information is sent to the agricultural assistance device 1 via an operation of the external terminal 10 by the user, the environmental information acquisition unit 5 connects to a meteorological-information server that provides meteorological information, and acquires meteorological information of the agricultural field up to now (recorded meteorological information) and future meteorological information (forecasted meteorological information).

The stage prediction unit 6 predicts the growth stage of the crop. Specifically, the stage prediction unit 6 predicts a date on which an integrated value obtained by integrating a quantified growth transition value of the crop from the reference date, reaches a normalized value to be the accomplishment date for the growth stage of the crop. For example, the stage prediction unit 6 predicts each growth stage of a wheat variety indicated in FIG. 3. That is, the stage prediction unit 6 can predict from a seeding date to an accomplishment date of the sprouting stage (growth stage), can predict an accomplishment date of the stem elongation stage (growth stage) at the sprouting stage, can predict an accomplishment date of the heading stage (growth stage) at the stem elongation stage, and can predict an accomplishment date of the blooming stage (growth stage) at the heading stage.

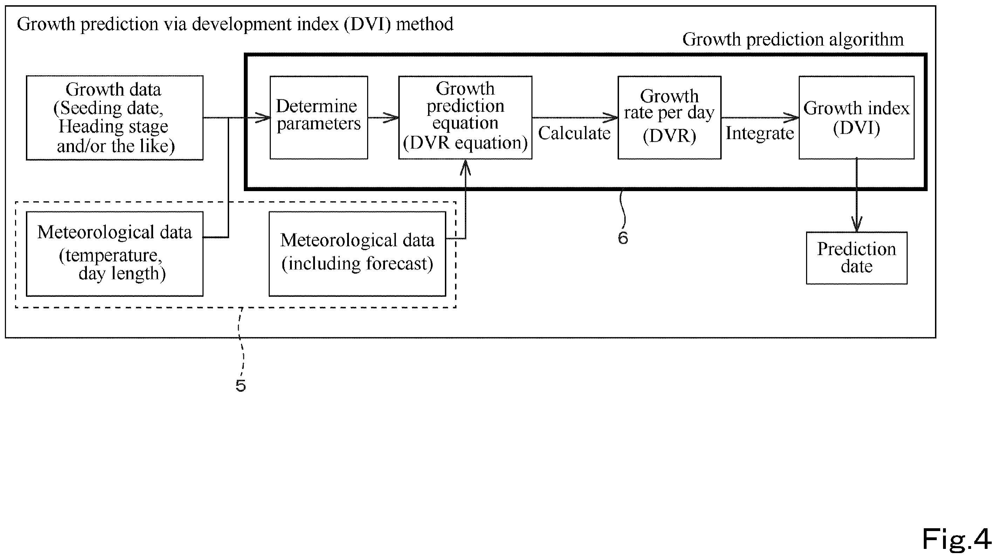

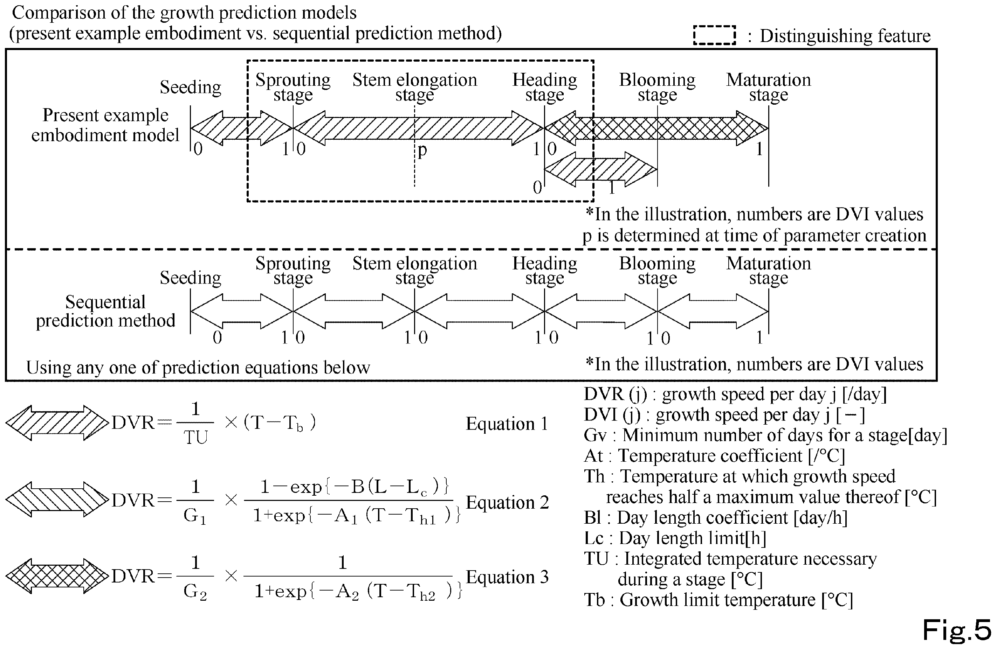

As shown in FIG. 4, the environmental information acquisition unit 5 acquires meteorological data (temperature, day length data) of the agricultural field up to now and future meteorological data (temperature, day length data), and outputs the acquired data to the stage prediction unit 6. The stage prediction unit 6 determines a parameter based on inputted growth data (seeding date, heading stage and/or the like) and on meteorological data from the environmental information acquisition unit 5, uses a growth prediction equation (a Development Rate (DVR: growth speed) of any one of equations 1 to 3 shown in FIG. 5) to calculate a growth rate per day (DVR value), and predicts a date on which a growth index (DVI: development index) which integrates the growth index (DVR value) of this one day reaches the normalized value to be a prediction date (that is, the accomplishment date).

With reference to FIG. 5, the following description compares an existing sequential growth prediction method and a growth prediction method of the present example embodiment. First, the existing sequential growth prediction method is a method to predict each growth stage. In greater details, as shown in FIG. 5, in the existing sequential growth prediction method the seeding date is set as the reference date (integrated value = 0), and a date on which the growth index (DVI) integrating the growth rate per date (DVR value) reaches a threshold (= 1) is predicted as an accomplishment date of the sprouting stage (growth stage). Then, the accomplishment date of the sprouting stage is set as the reference date (integrated value = 0), and a date on which the growth index (DVI) integrating the growth rate per date (DVR value) reaches a threshold (= 1) is predicted as an accomplishment date of the stem elongation stage (growth stage). Next, the accomplishment date of the stem elongation stage is set as the reference date (integrated value = 0), and a date on which the growth index (DVI) integrating the growth rate per date (DVR value) reaches a threshold (= 1) is predicted as an accomplishment date of the heading stage (growth stage).

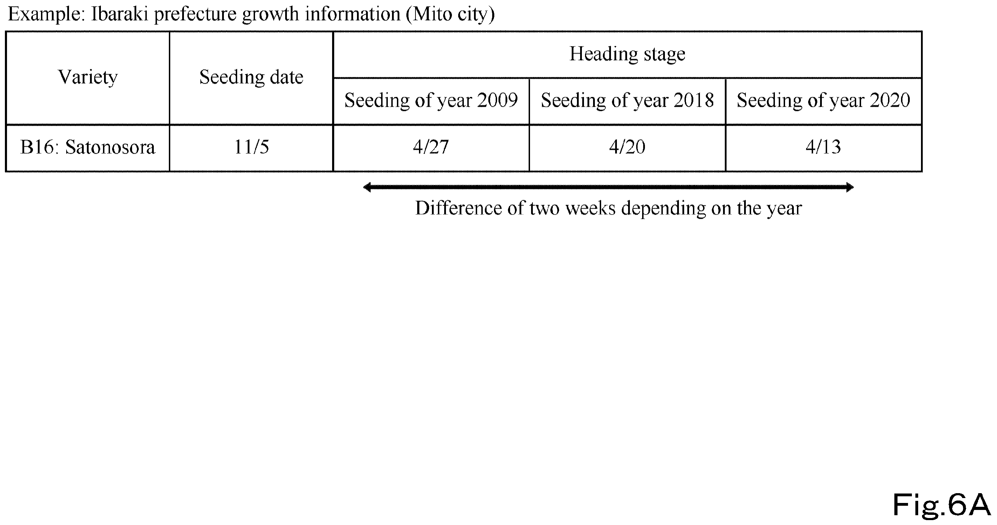

As shown in FIG. 6A, the existing sequential prediction method is used to predict the heading stage with the same day (for example, November 5^{th}) on three different years for the seeding day with respect to a crop variety B 16. Specifically, with respect to the prediction date for the heading stage being April 27^{th} for the task planning of 2009, the prediction date for 2020 was April 13^{th}. Thus, according to the existing sequential prediction method, it has been found that there is a difference of two weeks depending on the year with respect to the prediction of the heading stage. For this reason, it is difficult to perform an appropriate task (that is, timely task) during each growth stage according to the task planning same as every year.

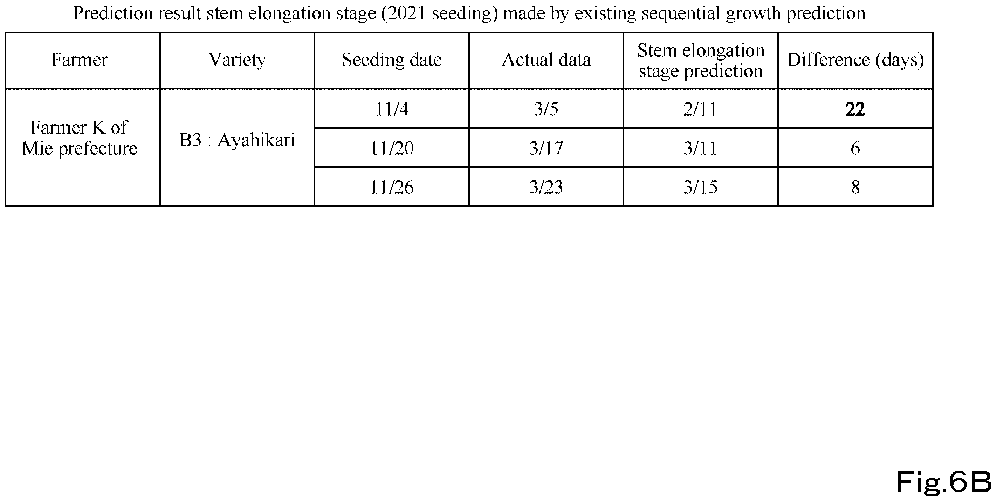

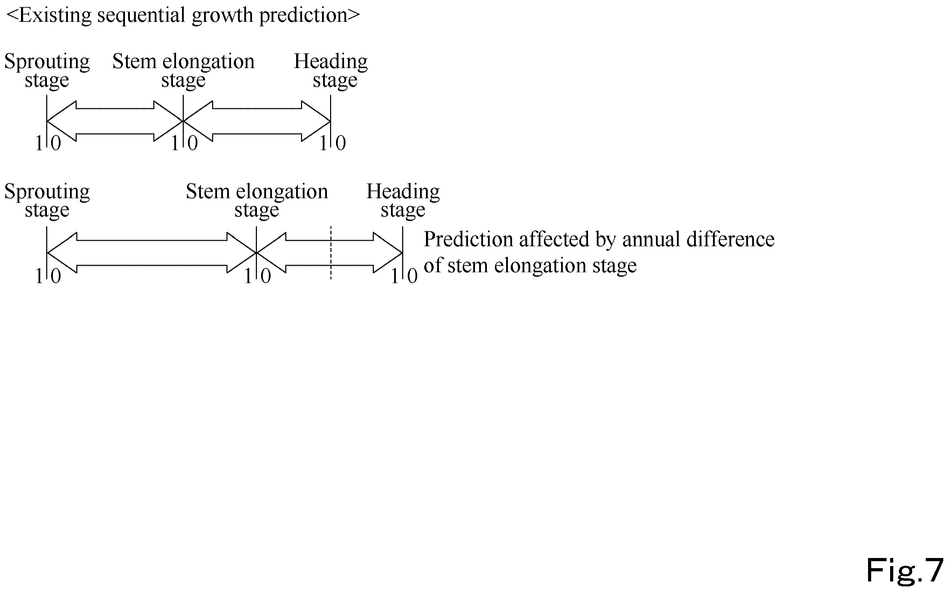

After assiduous research made by the inventor of the present invention regarding the reason for the above-mentioned issue, it has been found that, as shown in FIG. 6B, there is a difference of 22 days depending on the year regarding the stem elongation stage of a crop variety B3 and that, as shown in FIG. 7, the prediction of the heading stage varies due to substantial variation of the prediction of the stem elongation stage. That is, it has been found that it is necessary to predict the stem elongation stage as a specific growth stage in a precise manner. On the other hand, when predicting the heading stage from the sprouting stage, it has been found that the variation for prediction dates among years is small. The inventor has concluded that it is possible to reduce the variation of the growth prediction among years by defining a threshold p indicating a growth accomplishment of a growth stage (for example the stem elongation stage) , reversely from the heading stage which is beyond the stem elongation stage that the user wants to predict.

With the method of the present example embodiment, it has been made possible to predict the stem elongation stage with a much higher precision by providing the definition unit 7 to predict a next heading stage (growth stage) at the sprouting stage and set the threshold p indicating a prediction date of the stem elongation stage (growth stage) in a reverse manner from the heading stage, in comparison with the existing sequential prediction method.

In the present example embodiment, the growth prediction device 4 includes the definition unit 7. The definition unit 7 defines, when a period from the reference date to an accomplishment date of the heading stage includes a specific growth stage (for example the stem elongation stage), the threshold value p that indicates the prediction date for the specific growth stage (for example the stem elongation stage) in transition data for the growth stage predicted by the stage prediction unit 6. The stage prediction unit 6 predicts, when predicting a next (that is, next year) heading stage, a date on which transition data for the next (that is, next year) heading stage reaches the threshold value p to be the specific growth stage (for example the stem elongation stage). That is, the stem elongation stage is predicted.

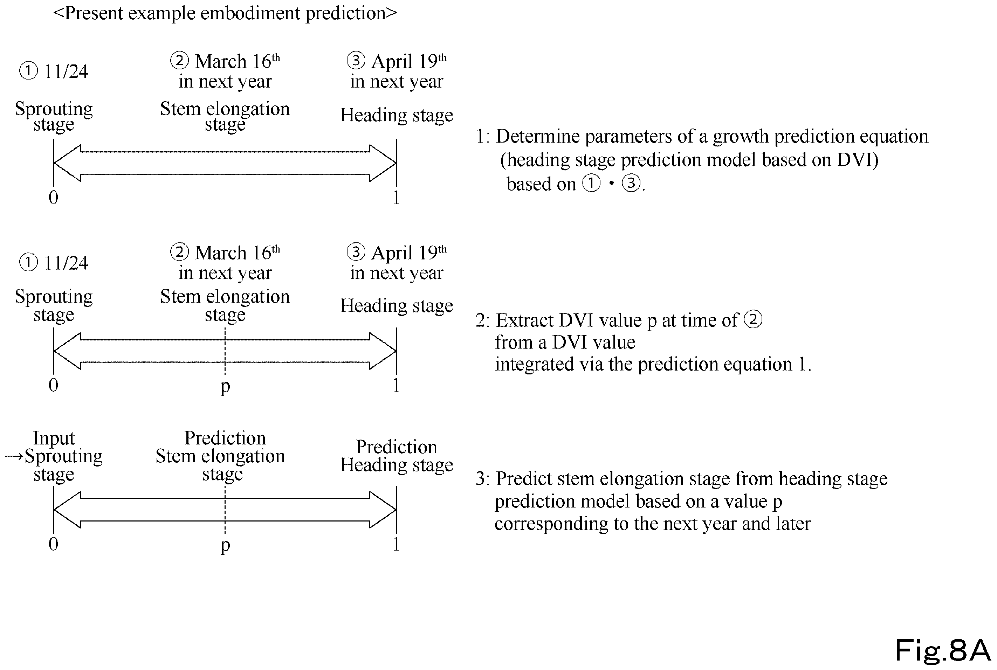

The stage prediction unit 6 predicts transition data of the integrated value for a period from the reference date to the accomplishment date of the growth stage (for example the heading stage). As shown in FIG. 8A, when the period from the reference date to the accomplishment date of the growth stage (for example the heading stage) includes the specific growth stage (for example the heading stage), the definition unit 7 defines the integrated value corresponding to the accomplishment date of the specific growth stage (for example the stem elongation stage) based on actual or past transition data of the crop, as the threshold value p indicating the prediction date for the specific growth stage (for example the stem elongation stage), in a reverse manner from the heading stage.

The stage prediction unit 6 determines, based on the sprouting stage and the heading stage shown in FIG. 8A, a parameter of a growth prediction equation shown in FIG. 5 (hereby, an equation 2 using temperature and day length). The stage prediction unit 6 may use a growth prediction equation 1 or 3 shown in FIG. 5. The definition unit 7 defines, among the integrated values (DVI values) integrated via the above-mentioned equation, the integrated value that is an accomplishment date of the actual stem elongation stage as the threshold value p. The manner to define the threshold value p will be described later.

The stage prediction unit 6 predicts, when predicting a next growth stage (that is a growth stage of the next-year task), the date on which the integrated value of the next growth stage reaches the threshold value p, as the specific growth stage, and predicts the date on which the integrated value reaches the normalized value, as the accomplishment date of the next growth stage. As shown in FIG. 8A, the stage prediction unit 6 predicts the stem elongation stage from a heading-stage prediction model based on the threshold value p corresponding to the next-year task(s).

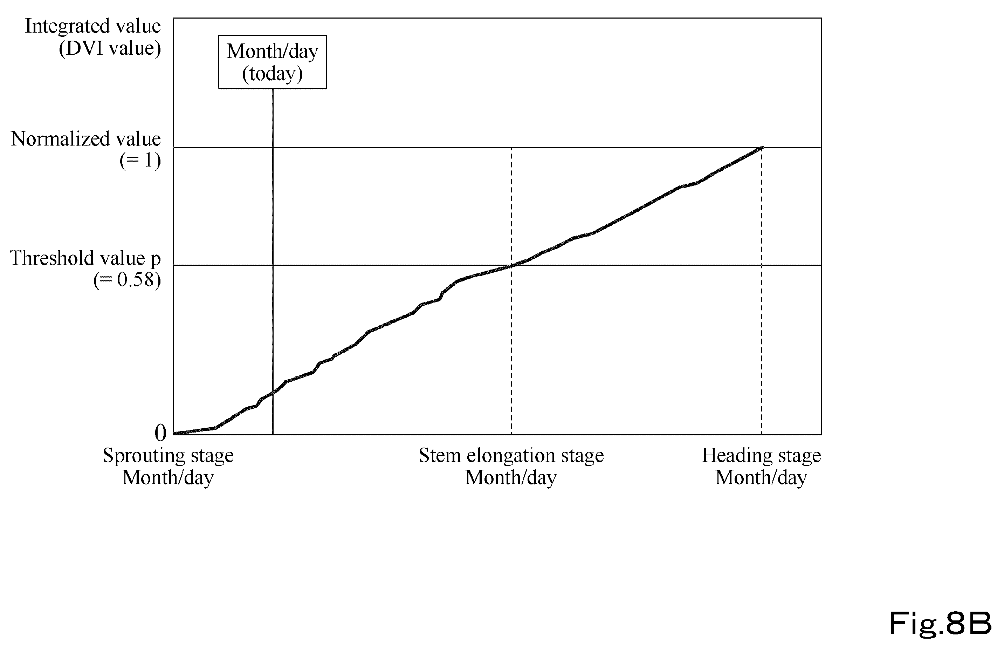

As shown in FIG. 8B, when performing the growth prediction of the heading stage for the next-year task, the stage prediction unit 6 defines the normalized value indicating the accomplishment date of the heading stage for the next-year task, predicts the date on which the integrated value (DVI value) for the next-year task reaches the threshold value p, and predicts the date on which the integrated value reaches the normalized value as the accomplishment date of the heading stage. The definition unit 7 defines the threshold value p indicating the accomplishment date of the specific growth stage (for example the stem elongation stage), in a reverse manner from the heading stage.

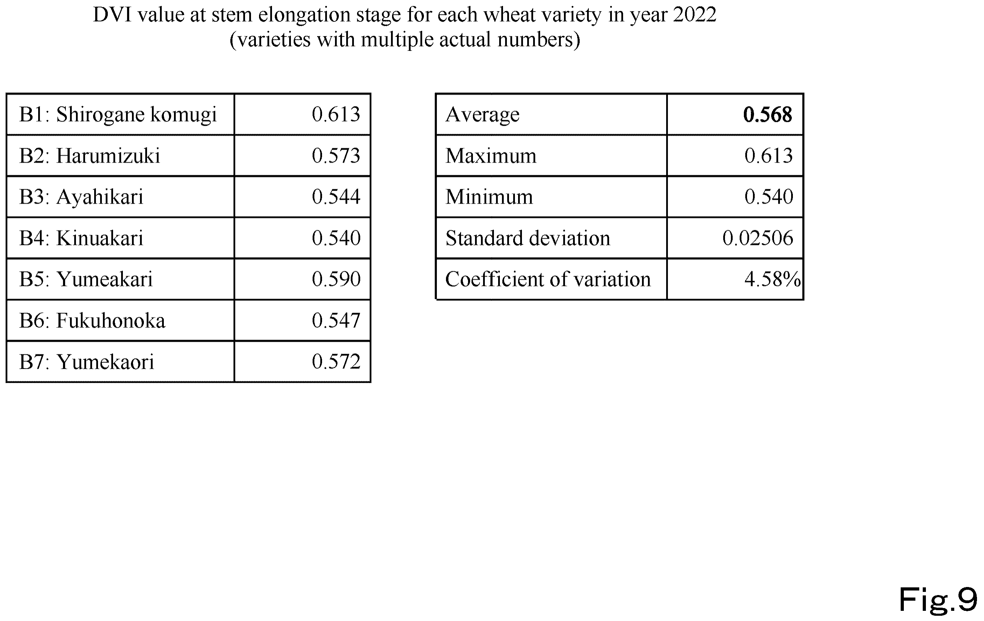

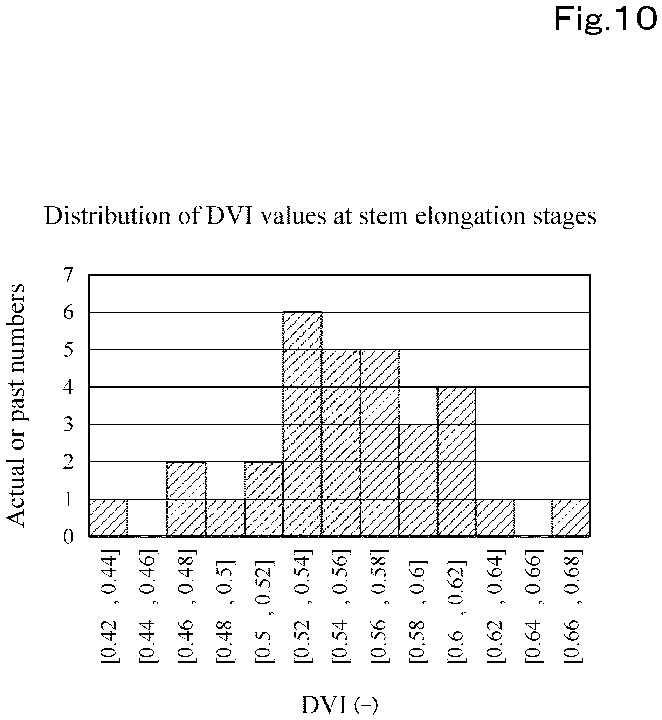

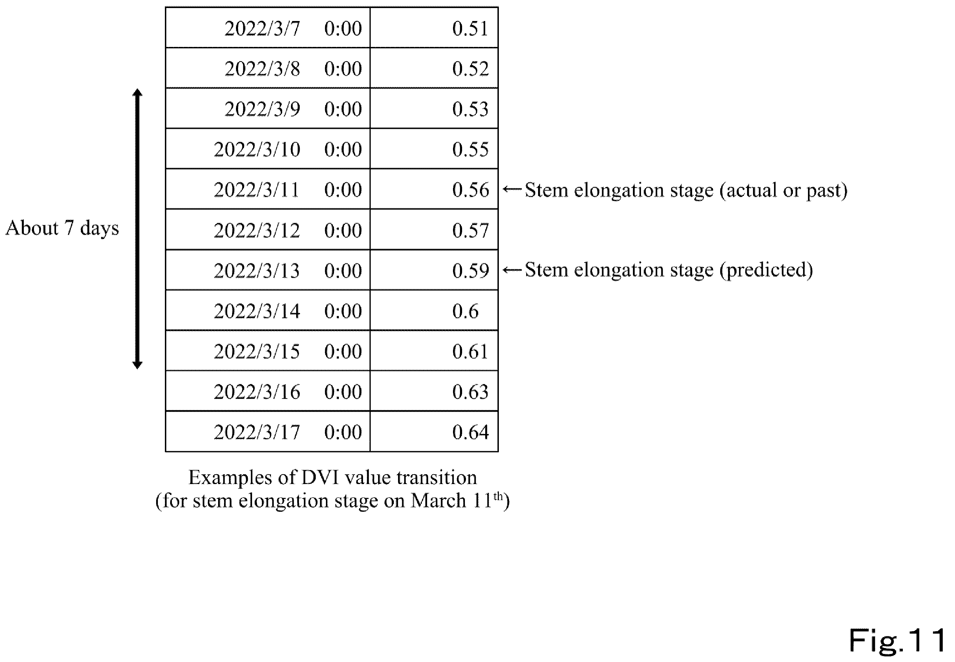

The following describes the manner of the definition of the threshold value p by the definition unit 7. As shown in FIG. 9, the definition unit 7 defines, as the threshold value p, an average value of integrated values (DVI values) of a plurality of crop varieties B1 to B7, each of which corresponds to the accomplishment date of the specific growth stage respectively indicated by actual or past data of the plurality of crop varieties B1 to B7. As shown in FIG. 9, integrated values of dates that indicate the stem elongation stage for the plurality of crop varieties B1 to B7 of wheat varieties were "0.613", "0.573", "0.544", "0.540", "0.590", "0.547" and "0.572". The average value, the maximum value, the minimum value, the standard deviation and the coefficient of variation of the integrated values were "0.568", "0.613", "0.540", "0.02506" and "4.58%", respectively. Distribution of the DVI values of the stem elongation stage indicated in FIG. 10 may provide estimation that the average value of the DVI value of the stem elongation stage is "0.58". As shown in FIG. 11, the dates on which the average DVI value of the stem elongation stage of the plurality of crop varieties B1 to B7 of the above-mentioned wheat varieties has changed from "0.540" to "0.613", fall within a period of about 7 days. Thus, when setting the average value of the plurality of crop varieties B1 to B7 of the above-mentioned wheat varieties that is the DVI value of the stem elongation stage at "0.58", it has been found that the stem elongation stage may be predicted within prediction errors of about 3-5 days.

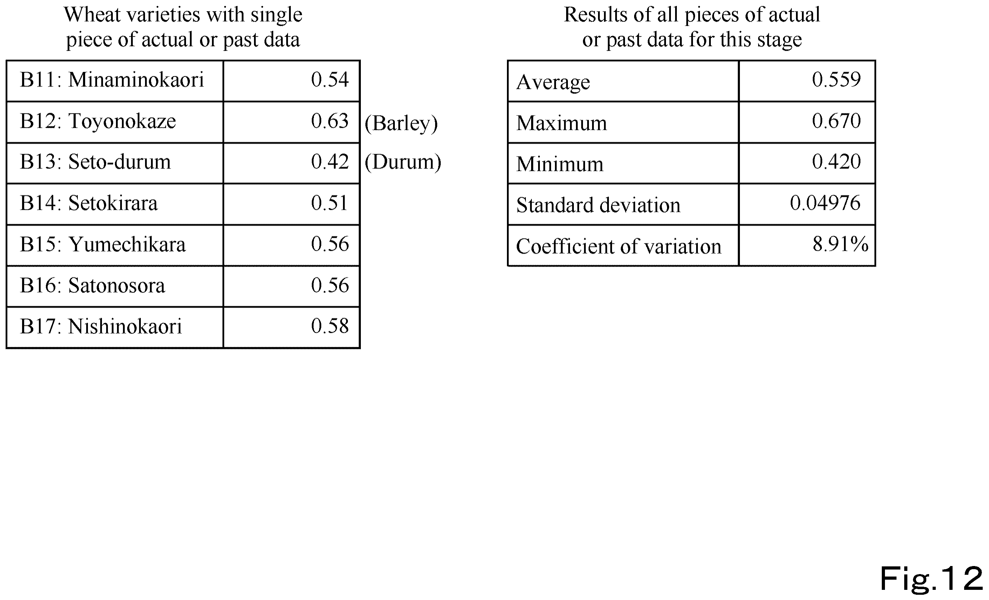

As shown in FIG. 12, the integrated values for the actual or past dates of the stem elongation stage regarding crop varieties B11 to B17, each of which includes a single piece of recorded data, is respectively of "0.54", "0.63", "0.42", "0.51", "0.56", "0.56" and "0.58". The average value, the maximum value, the minimum value, the standard deviation and the coefficient of variation for the integrated values are of "0.559", "0.670", "0.420", "0.04976" and "8.91%", respectively. The definition unit 7 may define the integrated value corresponding to the accomplishment date of the specific growth stage indicated by actual or past data for a single crop variety to be the threshold value p.

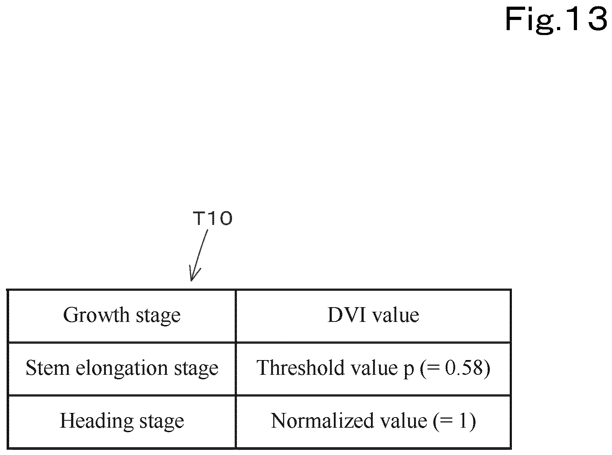

The agricultural assistance device 1 includes a settings memory 8. The settings memory 8 is a memory such as a nonvolatile memory or the like included in the agricultural assistance device 1. As shown in FIG. 13, the settings memory 8 stores a determination table T10 to determine a growth stage. The determination table T10 stores a relationship between a growth stage of the heading stage, the threshold value p of the specific growth stage (stem elongation stage) of the integrated value set for the stem elongation stage, and the normalized value of the specific growth stage indicating the accomplishment date of the heading stage. For example, the determination table T10 includes the heading stage including the stem elongation stage, the threshold value p to determine when the stem elongation stage has started, and the normalized value indicating the accomplishment date of the heading stage. That is, the definition unit 7 defines the threshold value p stored in the determination table T10 to be the threshold value p determining when the stem elongation stage has started. The threshold value p is lower than the normalized value.

The settings memory 8 stores a plurality of pieces of actual or past data for the plurality of crop varieties B1 to B7 shown in FIG. 9, and a single piece of actual or past data for the crop varieties B11 to B17 shown in FIG. 12.

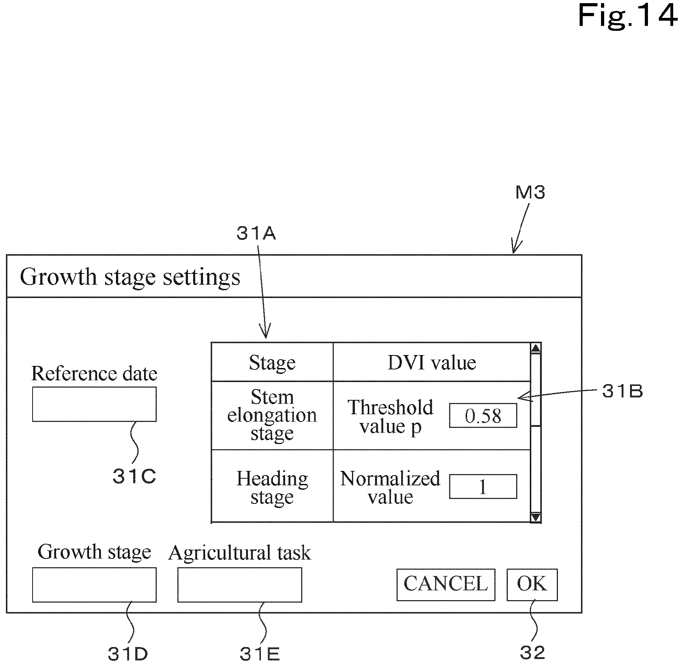

As shown in FIG. 14, for example, when the external terminal 10 connects to the agricultural assistance device 1 and the agricultural assistance device 1 sends a third instruction (an instruction to display a settings screen M3), the stage prediction unit 6 causes the external terminal 10 to display the settings screen M3. The settings screen M3 is a screen for an operator to set the relationship between the growth stage of the determination table T10, the threshold value p and the normalized value, which includes a stage display 31A to display a growth stage, an input portion 31B to input the threshold value p and the normalized value, and a reference-date input portion 31C to input the reference date.

It is possible to input the normalized value regarding the growth stage (for example the stem elongation stage) into the input portion 31B, and it is possible to change the relation between a growth stage and the normalized value by changing the normalized value to be inputted into the input portion 31B. It is possible to input the reference date into the reference-date input portion 31C. For example, when predicting the heading stage, the date on which the sprouting stage has been reached is inputted. The settings memory 8 associates and stores the normalized value inputted into the input portion 31B and the reference date inputted into the reference-date input portion 31C.

The settings screen M3 includes a growth stage input portion 31D to input a growth stage, and an agricultural-task input portion 31E to input an agricultural task corresponding to the inputted growth stage. For example, when a tillering-stage has been inputted into the growth stage input portion 31D, it is possible to, as shown in FIG. 3, input wheat treading, tillering-stage additional fertilizing, hilling, and herbicide spraying as the agricultural tasks of the tillering-stage. When the stem elongation stage has been inputted into the growth stage input portion 31D, it is possible to, as shown in FIG. 3, input panicle fertilizing and hilling as the agricultural tasks of the stem elongation stage. When the heading stage has been inputted into the growth stage input portion 31D, it is possible to, as shown in FIG. 3, input fusarium prevention and topdressing as the agricultural tasks of the heading stage. The settings memory 8 associates and stores the growth stage inputted into the growth stage input portion 31D and the agricultural task corresponding to the growth stage inputted into the growth stage input portion 31D.

When a settings button 32 is selected on the settings screen M3, the relationship between the threshold value p and the normalized value in the determination table T10, the reference date, and the agricultural task depending on the growth stage are set. That is, the stage prediction unit 6 can predict, from the scheduled operation date of the agricultural task, the growth stage based on the relationship between a scheduled operation date (reference date) and meteorological information. The stage prediction unit 6, for example, predicts a date on which the threshold value p has reached the integrated value as the accomplishment date of the stem elongation stage, and the worker performs panicle fertilizing during the stem elongation stage. The stage prediction unit 6 predicts a date on which the integrated value has reached the normalized value as the accomplishment date of the heading stage, and the worker performs topdressing during the heading stage.

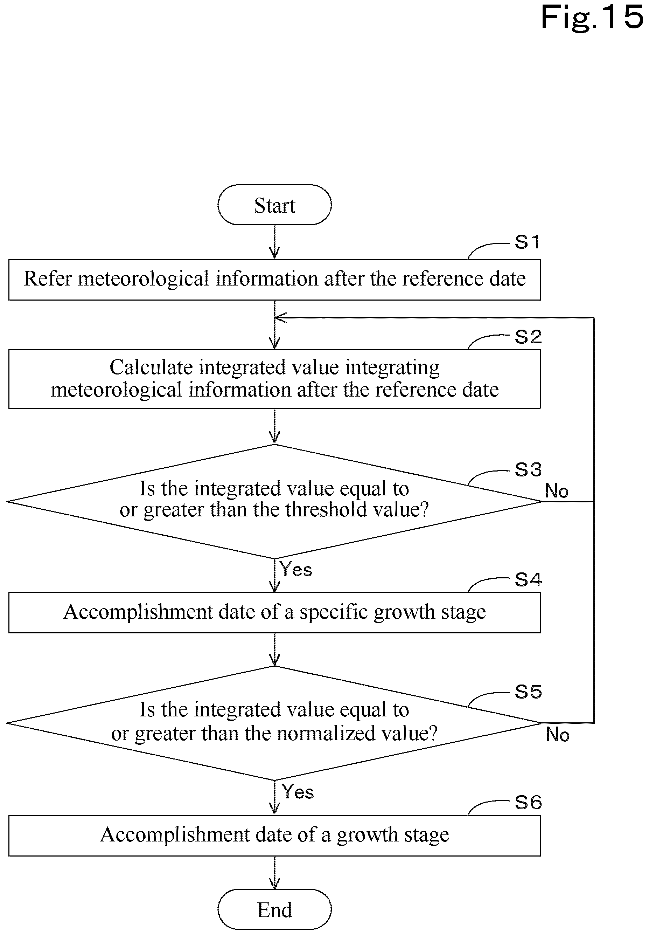

The following describes, with reference to FIG. 15, a process in which the growth prediction device 4 predicts the growth stage (for example the heading stage) for the next-year task. The stage prediction unit 6 of the growth prediction device 4 predicts the growth stage based on the reference date set beforehand and transition of meteorological information (recorded meteorological information, forecasted meteorological information). As shown in FIG. 15, in a case where the reference date is, for example, November 24^{th}, the stage prediction unit 6 acquires, from the environmental acquisition unit 5, meteorological information (recorded meteorological information, forecasted meteorological information) and refers to the acquired meteorological information after the reference date (for example November 24^{th}) (S1). The stage prediction unit 6 determines the integrated value obtained by integrating values of predetermined items (for example temperature or day length) from the reference date (November 24^{th}), which are acquired by the stage prediction unit 6 (S2). The stage prediction unit 6 determines whether the determined integrated value has reached the threshold value p of the specific growth stage (for example the stem elongation stage), that is, the threshold value p defined by the definition unit 7 (S3). When the integrated value has not reached the threshold value p (NO at S3), the stage prediction unit 6 returns to S2. On the other hand, when the integrated value has reached the threshold value p (YES at S3), the stage prediction unit 6 sets the date on which the integrated value has reached the threshold value p as the accomplishment date (that is, the date on which the stem elongation stage has started) of the specific growth stage (for example the stem elongation stage) (S4). On the other hand, when the integrated value has not reached the threshold value p (NO at S3), the stage prediction unit 6 returns to S2.

The stage prediction unit 6 determines whether the integrated value has reached the normalized value of a predetermined growth stage (hereby the heading stage) (S5). When the integrated value has not reached the normalized value (NO at S3), the stage prediction unit 6 returns to S2. On the other hand, when the integrated value has reached the normalized value (YES at S5), the stage prediction unit 6 sets the date on which the integrated value has reached the normalized value as the accomplishment date (that is, the date on which the heading stage has started) of the specific growth stage (heading stage) (S6). That is, the stage prediction unit 6 predicts, based on a transition value obtained by quantifying the transition of the pieces of meteorological information from the reference date, the accomplishment date of the specific growth stage (for example the stem elongation stage) and the accomplishment date of the heading stage.

The above-mentioned embodiment and the like provide a growth prediction device 4 and a growth prediction method as described in the following items.

(Item A1) The growth prediction device 4 includes a stage prediction unit 6 to predict a growth stage for a crop, and a definition unit 7 to define, when a period from a reference date to an accomplishment date of the growth stage includes a specific growth stage, a threshold value p that indicates a prediction date for the specific growth stage with respect to transition data for the growth stage predicted by the stage prediction unit. The stage prediction unit 6 predicts, when predicting a next growth stage, a date on which transition data for the next growth stage reaches the threshold value p to be the specific growth stage.

According to the above-mentioned item A1, the stage prediction unit 6 predicts a growth stage of a crop. Thus, it is possible to acquire transition data to estimate the accomplishment date of the growth stage. The definition unit 7 defines, when a period from a reference date to an accomplishment date of the growth stage includes a specific growth stage, the threshold value p that indicates a prediction date for the specific growth stage with respect to transition data for the growth stage predicted by the stage prediction unit 6. Thus, it is possible to predict the threshold value p even more accurately. The stage prediction unit 6 predicts, when predicting a next growth stage, a date on which transition data for the next growth stage reaches the threshold value p to the specific growth stage. Thus, it is possible to reduce a variation of prediction for an accomplishment date of the specific growth stage included in a period that ends with the accomplishment date of the growth stage.

(Item A2) The growth prediction device 4 according to item A1 wherein the stage prediction unit 6 predicts a date on which an integrated value obtained by integrating a quantified growth transition value of the crop from the reference date, reaches a normalized value to be the accomplishment date for the growth stage of the crop. The definition unit 7 defines, when the period from the reference date to the accomplishment date of the growth stage includes the specific growth stage, an integrated value corresponding to the accomplishment date of the specific growth stage indicated by actual data of the crop in transition data of an integrated value from the reference date to the accomplishment date predicted by the stage prediction unit 6 to be a threshold value p indicating a prediction date for the specific growth stage. The stage prediction unit 6 predicts, when predicting a next growth stage, a date on which the integrated value of the next growth stage reaches the threshold value p to be the specific growth stage, and may predict the day on which the integrated value reaches the normalized value to be the accomplishment date of the next growth stage.

According to the above-mentioned item A2, the stage prediction unit 6 predicts a date on which an integrated value obtained by integrating a quantified growth transition value of the crop from the reference date, reaches a normalized value to be the accomplishment date for the growth stage of the crop. Thus, it is possible to acquire transition data of the integrated value of the growth stage. The definition unit 7 defines, when the period from the reference date to the accomplishment date of the growth stage includes the specific growth stage, an integrated value corresponding to the accomplishment date of the specific growth stage indicated by actual or past data of the crop in transition data of an integrated value from the reference date to the accomplishment date predicted by the stage prediction unit 6 to be a threshold value p indicating a prediction date for the specific growth stage. Thus, it is possible to predict the threshold value p even more accurately. The stage prediction unit 6 predicts, when predicting a next growth stage, a date on which the integrated value of the next growth stage reaches the threshold value p to be the specific growth stage and may predict the day on which the integrated value reaches the normalized value to be the accomplishment date of the next growth stage. Thus, it is possible to reduce a variation of a prediction for an accomplishment date of the specific growth stage included in the growth stage. The stage prediction unit 6 predicts, when predicting the next growth stage, a date on which the integrated value of the next growth stage reaches the normalized value to be the next growth stage. Thus, it is possible to reduce a variation in a prediction of the accomplishment date of the growth stage. Accordingly, it is possible to improve a prediction accuracy for the growth stage. Since the existing method to sequentially predict each growth stage is not used, an issue in a previous stage growth prediction does not occur. That is, it is possible to solve an issue in which prediction accuracy for a specific growth stage is low, and an issue in which a great prediction variation for all of the growth stages occurs due to a prediction variation in the specific growth stage.

(Item A3) The growth prediction device 4 according to item A2 wherein the definition unit 7 defines an average value that is an average of respective integrated values of a plurality of crop varieties B1 to B7 corresponding to the specific growth stage respectively indicated by actual data of the plurality of crop varieties B1 to B7.

According to the above-mentioned item A3, it is possible to define a threshold value p including the plurality of crop varieties B1 to B7. Since the threshold value p is defined based on actual or past data of the plurality of crop varieties B1 to B7, it is possible to increase a reliability of the threshold value p. Accordingly, it is possible to reduce prediction variation for a growth stage of a crop variety with a growth prediction thereof to be performed anew.

(Item A4) The growth prediction device 4 according to item A2 wherein the definition unit 7 defines the integrated value corresponding to the specific growth stage indicated by actual data of a single crop variety to be the threshold value p.

According to the above-mentioned item A4, the definition unit 7 defines the integrated value corresponding to the specific growth stage indicated by actual data of a single crop variety to be the threshold value p. Thus, it is possible to define a threshold value p that is specialized for a single crop variety. Accordingly, it is possible to reduce a prediction variation for a growth stage of a crop that is a same or of a same type as the single crop variety.

For example, the definition unit 7 may define, as a single crop variety, actual or past data of the crop variety B15: Yumechikara shown in FIG. 12, that is, define the threshold value p as "0.56". For example, it is possible to define the actual or past data by inputting "0.56" into the input portion 31B shown in FIG. 14. The actual or past data "0.56" is the integrated value (DVI value) of the day on which the crop variety B15 was actually in the stem elongation stage.

(Item A5) The growth prediction device 4 according to item A2 wherein the definition unit 7 defines the integrated value corresponding to the specific growth stage indicated by actual data of a same crop variety to be the threshold value p.

According to the above-mentioned item A5, the definition unit 7 defines the integrated value corresponding to the specific growth stage indicated by actual or past data of a same crop variety to be the threshold value p. Thus, it is possible to define a threshold value p that is specialized for a same type of crop variety. Accordingly, it is possible to reduce prediction variation for a growth stage of a crop that is of a same type.

For example, in a case where a crop on the agricultural field is the crop variety B7: Yumekaori shown in FIG. 9 the definition unit 7 may define the actual data of the crop variety B7: Yumekaori of the same type, that is "0.57", to be the threshold value p. For example, it is possible to define by inputting "0.57" into the input portion 31B shown in FIG. 14. The actual or past data "0.57" is the integrated value (DVI value) of the day on which the crop variety B7 was actually in the stem elongation stage.

(Item A6) The growth prediction device 4 according to item A2 wherein the definition unit 7 defines the integrated value corresponding to the specific growth stage indicated by actual or past data of a crop in a designated agricultural field to be the threshold value p.

According to the above-mentioned item A6, the definition unit 7 defines the integrated value corresponding to the specific growth stage indicated by actual data of a crop in a designated agricultural field to be the threshold value p. Thus, it is possible to define a threshold value p specialized for the designated agricultural field. Accordingly, it is possible to reduce a prediction variation for a growth stage of a crop that is the same as the designated field or a crop in a close agricultural field.

The settings memory 8 may, beforehand, associate and store an agricultural field set by the agricultural field setting portion 13 and actual or past data of a crop in the agricultural field set. For example, the actual or past data is an integrated value (DVI value) of a day on which the crop of the agricultural field actually was in the stem elongation stage. For example, when the agricultural field is designated via the external terminal 10, the actual or past data of the crop of the agricultural field stored in the settings memory 8 is displayed, and, by inputting the displayed actual data (integrated value) into the input portion 31B shown in FIG. 14, it is possible to define the threshold value p.

(Item A7) The growth prediction device 4 according to any one of items A1 to A6 wherein the period from the reference date to the accomplishment date of the growth stage includes an overwintering period and the specific growth stage immediately following the overwintering period.

According to the above-mentioned item A7, it is possible to reduce prediction variation of a specific growth stage immediately following the overwintering period.

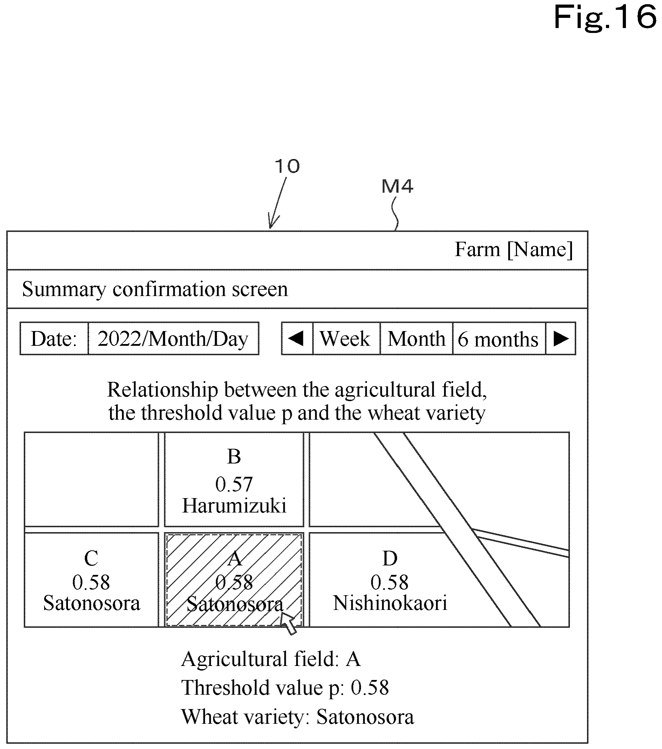

When the external terminal 10 connects to the agricultural assistance device 1 and sends a fourth instruction (instruction to display a summary confirmation screen M4) to the agricultural assistance device 1, as shown in FIG. 16, the growth prediction device 4 sends, to the external terminal 10, data to display the summary confirmation screen M4. The external terminal 10 displays the summary confirmation screen M4 based on the received data. The summary confirmation screen M4 is a screen to display each agricultural field, and a threshold value p of the specific growth stage (for example the stem elongation stage) of each agricultural field. The worker can verify at once a relationship between each agricultural field and the respective threshold values p thereof by looking at the summary confirmation screen M4. The summary confirmation screen M4 may display each agricultural field, the respective threshold values p thereof and the crop variety of the crop matched together. In such a case, it is possible to compile and verify the agricultural field, the threshold value p and the crop variety of the crop.

(Item A8) The growth prediction device 4 according to any one of items A1 to A6 wherein the crop is an overwintering crop.

According to the above-mentioned item A8, it is possible to reduce prediction variation for the growth stage of an overwintering crop.

(Item A9) The growth prediction device 4 according to item A7 or A8 wherein the overwintering crop is either one of a wheat variety or onions.

According to the above-mentioned item A9, it is possible to reduce a prediction variation for the growth stage of wheat or onions.

In the above-described example embodiment, it is possible to reduce prediction variation for the growth stage of a wheat variety which is an example of overwintering crop. Note that the overwintering crop is not limited to a wheat variety. For example, the overwintering crop may be onions or the like. In such a case, it is possible to reduce prediction variation for the growth stage of onions.

(Item A10) The growth prediction device 4 according to any one of items A1 to A9 wherein the specific growth stage may include any one of a stem elongation stage, a panicle formation stage, an internode-elongation initiating stage and a meiotic stage for a wheat variety, and any one of a stem and leaves extension stage and a bulb enlargement stage for onions.

According to the above-mentioned item A10, it is possible to reduce a prediction variation for the accomplishment date of a stem elongation stage, a panicle formation stage, an internode-elongation initiating stage and a meiotic stage in a case of a wheat variety, and of a stem and leaves extension stage and a bulb enlargement stage in a case of onions.

The specific growth stage for a wheat variety includes the stem elongation stage, but this does not imply any limitation. For example, the specific growth stage may include any one of the panicle formation stage, the internode-elongation initiating stage, and the meiotic stage. For onions, the specific growth stage may include any one of the stem and leaves extension stage and the bulb enlargement stage.

(Item A11) A growth prediction method includes a first step during which the stage prediction unit 6 predicts a growth stage for a crop (S6 in FIG. 15), a second step during which the definition unit 7 defines, when a period from a reference date to an accomplishment date of the growth stage includes a specific growth stage, a threshold value p that indicates a prediction date for the specific growth stage with respect to transition data for the growth stage predicted by the stage prediction unit 6 (defining a threshold value p in the input portion 31B of FIG. 14), and a third step during which the stage prediction unit 6 predicts, when predicting a next growth stage, a date on which transition data for the next growth stage reaches the threshold value to be the specific growth stage (S4 of FIG. 15).

According to the above-mentioned item A11, during the first step, the stage prediction unit 6 predicts a growth stage for a crop. Thus, it is possible to acquire transition data to estimate an accomplishment date of the growth stage. During the second step, the definition unit 7 defines, when a period from a reference date to an accomplishment date of the growth stage includes a specific growth stage, a threshold value p that indicates a prediction date for the specific growth stage with respect to transition data for the growth stage predicted by the stage prediction unit 6. Thus, it is possible to predict the threshold value p even more accurately. During the third step, the stage prediction unit 6 predicts, when predicting a next growth stage, a date on which transition data for the next growth stage reaches the threshold value to be the specific growth stage. Thus, it is possible to reduce prediction variation of the accomplishment date of the specific growth stage included in the growth stage. Accordingly, it is possible to improve prediction accuracy for the growth stage.

It is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Agricultural assistance device
- 2: Task generator
- 3: Task memory
- 4: Growth prediction device
- 5: Environmental information acquisition unit
- 6: Stage prediction unit
- 7: Definition unit
- 8: Settings memory
- 10: External terminal
- 30: Meteorological-information server
- M1: Task planning screen
- M2: Task confirmation screen
- M3: Settings screen
- p: Threshold value
- T10: Determination table

## Claims

1. A growth prediction device comprising:
a stage prediction unit to predict a growth stage for a crop; and
a definition unit to define, when a period from a reference date to an accomplishment date of the growth stage includes a specific growth stage, a threshold value that indicates a prediction date for the specific growth stage with respect to transition data for the growth stage predicted by the stage prediction unit, wherein
the stage prediction unit predicts, when predicting a next growth stage, a date on which transition data for the next growth stage reaches the threshold value to be the specific growth stage.

2. The growth prediction device according to claim 1, wherein:
the stage prediction unit predicts a date on which an integrated value obtained by integrating a quantified growth transition value of the crop from the reference date, reaches a normalized value to be the accomplishment date for the growth stage of the crop,
the definition unit defines, when the period from the reference date to the accomplishment date of the growth stage includes the specific growth stage, the integrated value corresponding to the accomplishment date of the specific growth stage indicated by actual data of the crop in transition data of the integrated value from the reference date to the accomplishment date predicted by the stage prediction unit to be a threshold value indicating a prediction date for the specific growth stage, and
the stage prediction unit predicts, when predicting a next growth stage, a date on which the integrated value of the next growth stage reaches the threshold value to be the specific growth stage and predicts the date on which the integrated value reaches the normalized value to be the accomplishment date of the next growth stage.

3. The growth prediction device according to claim 2, wherein
the definition unit defines an average value that is an average of respective integrated values of a plurality of crop varieties corresponding to the specific growth stage respectively indicated by actual data of the plurality of crop varieties.

4. The growth prediction device according to claim 2, wherein
the definition unit defines the integrated value corresponding to the specific growth stage indicated by actual data of a single crop variety to be the threshold value.

5. The growth prediction device according to claim 2, wherein
the definition unit defines the integrated value corresponding to the specific growth stage indicated by actual data of a same crop variety to be the threshold value.

6. The growth prediction device according to claim 2, wherein
the definition unit defines the integrated value corresponding to the specific growth stage indicated by actual data of a crop in a designated agricultural field to be the threshold value.

7. The growth prediction device to any one of claims 1 to 6, wherein
the period from the reference date to the accomplishment date of the growth stage includes an overwintering period and the specific growth stage immediately following the overwintering period.

8. The growth prediction device to any one of claims 1 to 6, wherein
the crop is an overwintering crop.

9. The growth prediction device according to claim 8, wherein
the overwintering crop is either one of a wheat variety or onions.

10. The growth prediction device to any one of claims 1 to 6, wherein
the specific growth stage includes any one of a stem elongation stage, a panicle formation stage, an internode-elongation initiating stage and a meiotic stage for a wheat variety, and any one of a stem and leaves extension stage and a bulb enlargement stage for onions.

11. A growth prediction method comprising:
a first step for predicting a growth stage for a crop by a stage prediction unit;
a second step for defining, by a definition unit, a threshold value that indicates a prediction date for a specific growth stage with respect to transition data for the growth stage predicted by the stage prediction unit when a period from a reference date to an accomplishment date of the growth stage includes the specific growth stage; and
a third step for predicting, when the stage prediction unit predicts a next growth stage, a date on which transition data for the next growth stage reaches the threshold value to be the specific growth stage.
